# EUROPEAN PATENT APPLICATION

(11) **EP 4 550 208 A1**
(43) Date of publication of application: **07.05.2025**
(21) Application number: 23831364.7
(22) Date of filing: 26.06.2023
(51) Int. Cl.: G06K 19/077, B42D 25/24, B42D 25/305, G06K 19/02

(54) **IC SHEET, AND PASSPORT AND CONTACTLESS IC CARD WITH IC SHEET**

(30) Priority: 29.06.2022 JP 2022105016
(71) Applicant: Maxell, Ltd., Kyoto 618-8525 (JP)
(72) Inventor: OAE, Koji, Otokuni-gun, Kyoto 618-8525 (JP); KAMEDA, Yoshikazu, Otokuni-gun, Kyoto 618-8525 (JP)
(74) Representative: Mewburn Ellis LLP
(86) International application number: PCT/JP2023/023520
(87) International publication number: WO 2024/004922

(57) **Abstract**

To reliably prevent cover sheets from peeling off from an inlet without lowering productivity even in a case where polycarbonate is selected as material of the cover sheets in an IC sheet including the inlet and the cover sheets disposed on and under the inlet. An IC sheet 1 of the present invention includes: an inlet 2 including an IC chip 7, an antenna 8 that is connected to the IC chip 7, and a support sheet 10 that includes a nonwoven fabric and holds the IC chip 7 and the antenna 8; and cover sheets 3 and 4 that include polycarbonate and are disposed under and on the inlet 2, respectively. Polycarbonate resin constituting the cover sheets 3 and 4 is solidified in a state of entering between fibers of the nonwoven fabric of the support sheet 10, so that the cover sheets 3 and 4 and the support sheet 10 are integrated.

## Description

### TECHNICAL FIELD

The present invention relates to an IC sheet incorporating a non-contact readable and writable IC chip, and a passport and a non-contact IC card including the IC sheet.

### BACKGROUND ART

An IC sheet in which an IC chip is built in a sheet body is often used for, for example, a transportation IC card. The thickness of such an IC sheet having a card size is formed to be about 0.76 mm conforming to the standard of the non-contact IC card defined in JIS. In recent years, an IC sheet incorporating an IC chip is also used in, for example, a passport, and in particular, in a booklet-shaped passport, the IC sheet is required to be thinner than an IC sheet used for a transportation IC card in order to prevent bulkiness due to the IC sheet.

As an example of the IC sheet, for example, Patent Literature 1 by the present applicant can be cited. The IC sheet described in Patent Literature 1 includes an inlet in which an IC chip and an antenna (antenna coil) are held on a support sheet (base sheet), two cover sheets disposed on the front side (upper side) of the inlet, and one cover sheet disposed on the back side (lower side). The inlet and the cover sheets are integrated by hot pressing in a state where they are stacked.

### CITATION LIST

### PATENT LITERATURE

Patent Literature 1: JP 2015-184774 A

### SUMMARY OF INVENTION

### TECHNICAL PROBLEMS

In the IC card according to Patent Literature 1, amorphous polyethylene terephthalate (PET-G) is used as material of the cover sheet. The reason why amorphous polyethylene terephthalate (PET-G) is used as the material of the cover sheet as described above is that amorphous polyethylene terephthalate (PET-G) has the strength required for an IC card and that the workability of hot pressing in manufacturing is taken into consideration. However, if the thickness dimension of the cover sheet including amorphous polyethylene terephthalate (PET-G) is reduced, there is a disadvantage that the strength is insufficient.

The above-mentioned problem of insufficient strength can be solved by using polycarbonate (PC) as the material of the cover sheet. That is, if the material of the cover sheet is polycarbonate, sufficient strength can be obtained even in a case where the thickness of the cover sheet is relatively thin. This is because polycarbonate is more excellent in mechanical strength (flexural strength and impact resistance) than amorphous polyethylene terephthalate. However, since polycarbonate is inferior in adhesiveness (heat weldability) to polyethylene terephthalate, when the inlet and the cover sheet are integrated by hot pressing, peeling easily occurs between the two (the inlet and the cover sheet). This problem can be solved by using an adhesive when the inlet and the cover sheet are integrated, but in that case, a process of applying the adhesive is required in manufacturing, and productivity is lowered. In addition, since the thickness dimension increases by the amount of the formed adhesive layer, there is a limit to thinning of the IC card.

The present invention has been made to solve the above problems, and it is an object of the present invention to reliably prevent cover sheets from peeling off from an inlet without lowering productivity even in a case where polycarbonate is selected as material of the cover sheets in an IC sheet including the inlet and the cover sheets disposed on and under the inlet.

An object of the present invention is to prevent a passport mounted with an IC sheet from being bulky due to the IC sheet.

An object of the present invention is to obtain a non-contact IC card having excellent security and high decorativeness and designability.

### SOLUTIONS TO PROBLEMS

The present invention is directed to an IC sheet including: an inlet 2 including an IC chip 7, an antenna 8 that is connected to the IC chip 7, and a support sheet 10 that includes a nonwoven fabric and holds the IC chip 7 and the antenna 8; and cover sheets 3 and 4 that include polycarbonate and are disposed under and on the inlet 2, respectively. Then, polycarbonate resin constituting the cover sheets 3 and 4 is solidified in a state of entering between fibers of the nonwoven fabric of the support sheet 10, so that the cover sheets 3 and 4 and the support sheet 10 are integrated.

When a thickness dimension of the lower cover sheet 3 is denoted by T1 and a thickness dimension of the upper cover sheet 4 is denoted by T2, a total thickness dimension of the thickness dimension T1 and the thickness dimension T2 is preferably set to 0.35 mm or more and 0.5 mm or less.

The minimum dimension of each of the thickness dimension T1 of the lower cover sheet 3 and the thickness dimension T2 of the upper cover sheet 4 is preferably set to 0.05 mm or more.

An over sheet 28 including a sheet body including resin as material is disposed on an outer surface of the lower cover sheet 3 and/or an outer surface of the upper cover sheet 4.

A relief portion 24 including a recess is formed in the lower cover sheet 3, and the IC chip 7 is accommodated in the relief portion 24 in a state where the support sheet 10 and both the cover sheets 3 and 4 are stacked.

The lower cover sheet 3 includes a lower base sheet 18 that has a flat plate shape and in which a lower through hole 20 is formed, and a lower seal sheet 19 that has a flat plate shape and has a thickness smaller than a thickness of the lower base sheet 18. The lower base sheet 18 is disposed on the support sheet 10, the lower seal sheet 19 is disposed on the lower base sheet 18, and the lower through hole 20 and the lower seal sheet 19 that closes the lower through hole 20 form the relief portion 24.

The lower cover sheet 3 includes a lower base sheet 18 that has a flat plate shape and in which a lower through hole 20 is formed, and a lower seal sheet 19 that has a flat plate shape and has a thickness smaller than a thickness of the lower base sheet 18. The lower base sheet 18 is disposed on the support sheet 10, and the lower seal sheet 19 is disposed on the lower base sheet 18. The upper cover sheet 4 includes an upper base sheet 27 that has a flat plate shape and in which an upper through hole 40 is formed, and an upper seal sheet 39 that has a flat plate shape and has a thickness smaller than a thickness of the upper base sheet 27. The upper base sheet 27 is disposed on the support sheet 10, and the upper seal sheet 39 is disposed on the upper base sheet 27. Both the through holes 20 and 40 and the seal sheets 19 and 39 that close the through holes 20 and 40 form the relief portion 24.

A passport of the present invention includes the IC sheet 1 described in any one of the above.

A non-contact IC card of the present invention includes the IC sheet 1 described in any one of the above.

An exterior sheet 42 is stacked on at least one of an upper surface or a lower surface of the IC sheet 1.

### ADVANTAGEOUS EFFECTS OF INVENTION

According to the IC sheet of the present invention, since the polycarbonate resin constituting the upper and lower cover sheets 4 and 3 is solidified in a mixed state, both the cover sheets 4 and 3 can be firmly integrated. In addition, when these cover sheets 4 and 3 are integrated, the polycarbonate resin is solidified in a state of entering between the fibers of the nonwoven fabric which is the support sheet 10, so that the fibers of the nonwoven fabric and the polycarbonate resin can be firmly joined to firmly integrate the three parts (the upper and lower cover sheets 4 and 3 and the inlet 2) in a state where the inlet 2 is sandwiched between the upper and lower cover sheets 4 and 3. As described above, according to the present invention, since the three parts, that is, the inlet 2 and the cover sheets 4 and 3 can be firmly integrated, the cover sheets 4 and 3 can be reliably prevented from peeling off from the inlet 2. In addition, the IC sheet of the present invention can be manufactured by disposing the upper and lower cover sheets 3 and 4 so as to sandwich the inlet 2 therebetween and then softening the upper and lower cover sheets 4 and 3 by hot pressing. Therefore, as in a form in which the inlet and the cover sheet are joined with an adhesive, an adhesive application process is unnecessary, and it is possible to prevent productivity of the IC sheet from being lowered. As described above, according to the IC sheet of the present invention, it is possible to reliably prevent the cover sheets 3 and 4 from peeling off from the inlet 2 without lowering productivity. In addition, by using polycarbonate having mechanical strength superior to that of conventional amorphous polyethylene terephthalate as material of the upper and lower cover sheets 4 and 3, the IC sheet having more excellent mechanical strength (flexural strength and impact resistance) can be obtained. It is also possible to reduce the thickness dimension. Furthermore, in the IC sheet of the present invention, in the case of trying to forcibly peel the cover sheets 4 and 3 from the inlet 2, the support sheet 10 is torn and the inlet 2 is destroyed, so that it is impossible to take out the IC chip 7 including the antenna 8 in a sound state, and the IC sheet having excellent security can be obtained.

### BRIEF DESCRIPTION OF DRAWINGS

FIG. 1 is a longitudinal cross-sectional view of a main part of an IC sheet according to a first embodiment of the present invention.
FIG. 2 is a partially broken plan view of the IC sheet.
FIG. 3 is a perspective view of an inlet.
FIG. 4 is an exploded perspective view of the IC sheet.
FIG. 5 is a schematic view for explaining a method for manufacturing the IC sheet.
FIG. 6 is a perspective view illustrating a use state of the IC sheet.
FIG. 7 is an exploded perspective view of an IC sheet according to a second embodiment of the present invention.
FIG. 8 is a longitudinal cross-sectional view of the IC sheet.
FIG. 9 is an exploded perspective view of an IC sheet according to a third embodiment of the present invention.
FIG. 10 is a longitudinal cross-sectional view of the IC sheet.
FIG. 11 is an exploded perspective view of an IC sheet according a fourth embodiment of the present invention.
FIG. 12 is a longitudinal cross-sectional view of the IC sheet.
FIG. 13 is a perspective view illustrating a use state of the IC sheet.

### DESCRIPTION OF EMBODIMENTS

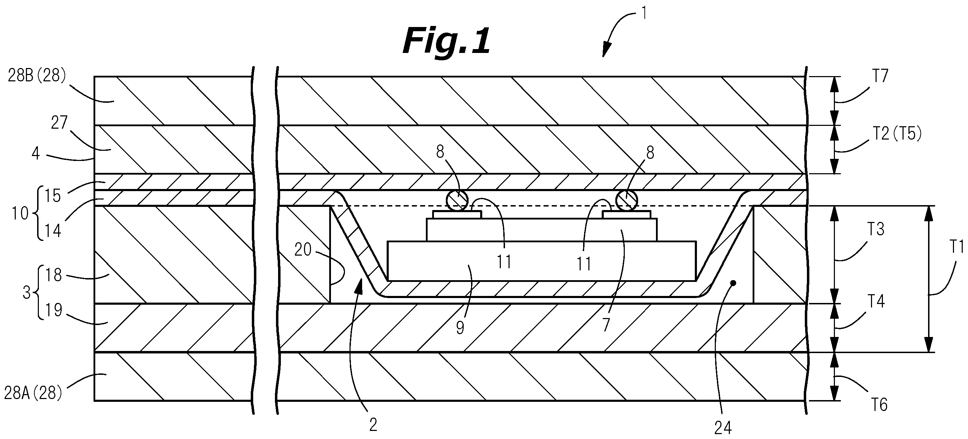

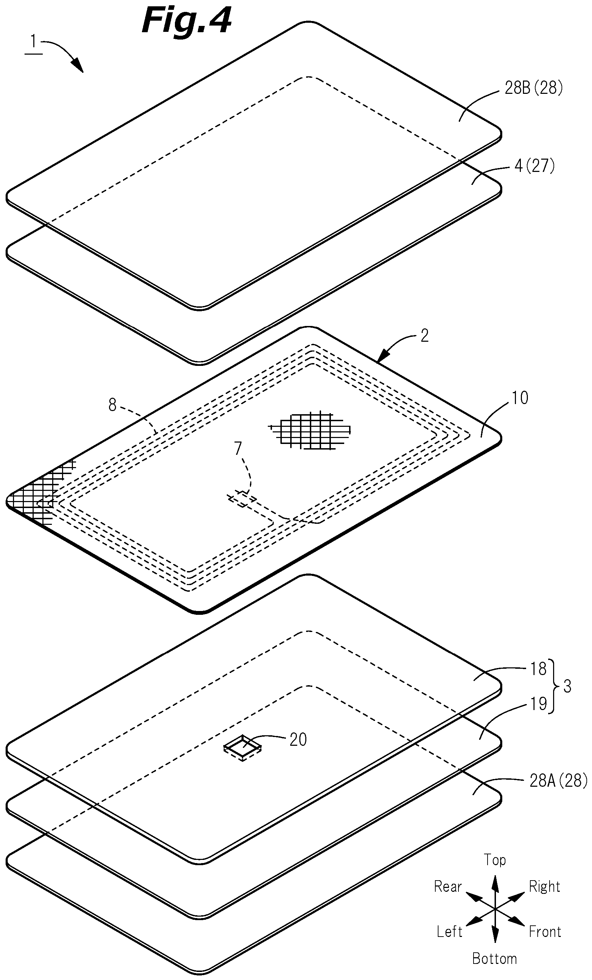

(First embodiment) FIGS. 1 to 6 illustrate a first embodiment of an IC sheet according to the present invention. Front and rear, left and right, and top and bottom in the present embodiment follow intersecting arrows illustrated in FIG. 4 and indications of front and rear, left and right, top and bottom denoted near the respective arrows, and the same applies to a second embodiment and the subsequent embodiments. Note that the top-bottom direction corresponds to the thickness direction of the IC sheet, and the dimensions such as the thickness in each drawing are not actually illustrated but schematically illustrated.

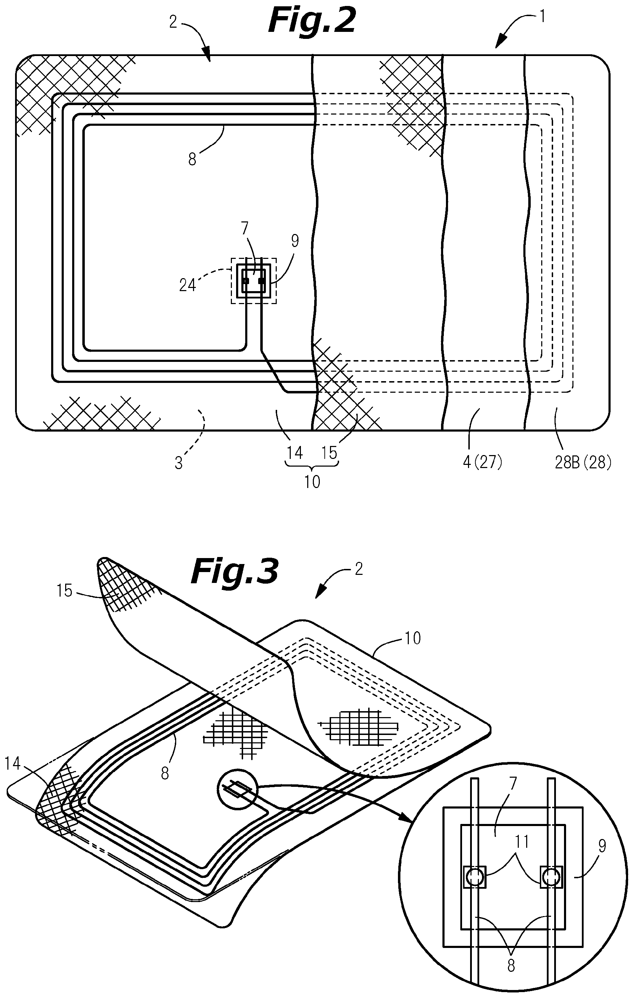

In FIG. 2, an IC sheet 1 mainly includes an inlet 2, a lower cover sheet 3 disposed on the lower side of the inlet 2, and an upper cover sheet 4 disposed on the upper side of the inlet 2. The IC sheet 1 can be formed in a planar size having a front-rear dimension of 54 to 88 mm and a left-right dimension of 86 to 125 mm. In the present embodiment, the IC sheet 1 is formed to have a front-rear dimension of about 54 mm and a left-right dimension of about 86 mm, which are the same as the non-contact IC card standards defined in JIS. Note that the thickness dimension is 0.76 mm according to the standard of the non-contact IC card, but it is desired to further reduce the thickness of the IC sheet 1 enclosed in a booklet-shaped passport.

As illustrated in FIGS. 2 and 3, the inlet 2 includes an IC chip 7 on which information is recorded, a loop coil-shaped antenna 8 connected to the IC chip 7, a chip base 9 that supports the IC chip 7, a support sheet 10 that holds the IC chip 7 and the antenna 8, and the like. The IC chip 7 has a square shape in which each side portion has a dimension of 3.0 mm in a plan view, and a pair of terminals 11 and 11 are protruded on the left and right sides of the front-rear central portion of the upper surface. The thickness dimension (top-bottom dimension) of the IC chip 7 including the terminal 11 is preferably 0.3 mm or less, and more preferably 0.05 mm or more and 0.2 mm or less. The thickness dimension of the IC chip 7 of the present embodiment is formed to be 0.05 mm.

The antenna 8 includes a copper wire having a wire diameter of 0.02 to 0.2 mm and having a surface coated with an insulating coating, and one copper wire is wound in a quadrangular spiral shape, and wire end portions are electrically connected to the terminals 11 of the IC chip 7, respectively. The number of turns of the antenna 8 is determined in accordance with the characteristics of the IC chip 7. The IC chip 7 is driven by the electromotive force generated in the antenna 8 disposed in the magnetic field radiated from a reader/writer, not illustrated, as a power source, and transmits and receives information to and from the reader/writer via the antenna 8.

The chip base 9 is formed to be one size larger than the IC chip 7 in plan view, and is provided to reinforce the IC chip 7 and prevent damage of the IC chip 7. The IC chip 7 is bonded and fixed to the upper surface of the chip base 9. The chip base 9 preferably includes a metal thin plate having a thickness dimension (top-bottom dimension) two to three times that of the IC chip 7, and the thickness dimension of the chip base 9 of the present embodiment is 0.12 mm.

As illustrated in FIG. 3, the support sheet 10 is formed by stacking a lower base fabric 14 and an upper base fabric 15 each including nonwoven fabric. The IC chip 7 including the chip base 9 and the antenna 8 are supported in a state of being sandwiched between the upper and lower base fabrics 15 and 14. The upper and lower base fabrics 15 and 14 are welded and fixed to be integrated on substantially the entire surfaces, and the IC chip 7 and the antenna 8 are reliably positioned and held between the two base fabrics 14 and 15. In a state where the respective members are integrated to constitute the inlet 2, a thickness dimension of a region (minimum thickness dimension region) whose thickness direction includes the support sheet 10 (lower base fabric 14 + upper base fabric 15) is preferably formed to be 0.1 to 0.2 mm. In addition, it is preferable that a thickness dimension of a region (maximum thickness dimension region) whose thickness direction includes the IC chip 7, the antenna 8, the chip base 9, and the support sheet 10 is formed to be 0.3 to 0.6 mm. In the present embodiment, the lower base fabric 14 and the upper base fabric 15 of the support sheet 10 each includes a nonwoven fabric having a thickness dimension of 0.1 mm, and the thickness dimension of the minimum thickness dimension region is formed to be 0.15 mm.

As the fibers constituting the upper and lower base fabrics 15 and 14, those having self-pressure-bonding properties by themselves or those imparted with self-pressure-bonding properties by impregnating an appropriate amount of synthetic resin are preferable. In the present embodiment, those including fibers in which the periphery of a core material of polyethylene terephthalate (PET) is coated with amorphous polyethylene terephthalate (PET-G) are used because they are easy to handle and excellent in thermopressure-bonding properties. The nonwoven fabric forming each of the upper and lower base fabrics 15 and 14 may have liquid absorbability obtained by one type of glass fiber, carbon fiber, Kevlar fiber, chemical fiber, or natural fiber, or a combination of these fibers, and may be impregnated with or attached to a low melting point synthetic resin as necessary. The upper and lower base fabrics 15 and 14 each include a nonwoven fabric having a thickness dimension of 0.1 mm.

As illustrated in FIGS. 1 and 4, the lower cover sheet 3 disposed on the lower side (back side) of the inlet 2 includes a lower base sheet 18 disposed under the lower base fabric 14 of the support sheet 10 and a lower seal sheet 19 disposed under the lower base sheet 18. Each of the sheets 18 and 19 is formed using polycarbonate (PC) as a material, the lower base sheet 18 is formed in a flat plate shape in which a lower through hole 20 vertically penetrating is opened, and the lower seal sheet 19 is formed in a flat plate shape without a hole or the like. The lower through hole 20 is provided at a position corresponding to the IC chip 7 of the inlet 2. In a state where the lower base sheet 18 and the lower seal sheet 19 are stacked, the lower opening portion of the lower through hole 20 is closed by the lower seal sheet 19, and the lower through hole 20 is configured as a recess opened upward. This recess functions as a relief portion 24 in which the IC chip 7 supported by the chip base 9 is accommodated when the upper and lower cover sheets 4 and 3 are stacked on and integrated with the inlet 2.

The upper cover sheet 4 disposed on the upper side (front side) of the inlet 2 includes an upper base sheet 27 disposed on the upper base fabric 15 of the support sheet 10. The upper base sheet 27 includes polycarbonate (PC) as material, and the upper base sheet 27 is formed in a flat plate shape having no hole or the like.

In FIG. 1, when a thickness dimension of the lower cover sheet 3 is denoted by T1 and a thickness dimension of the upper cover sheet 4 is denoted by T2, a total thickness dimension of the thickness dimension T1 and the thickness dimension T2 is preferably set to 0.35 mm or more and 0.5 mm or less, and is more preferably set to 0.35 mm or more and 0.45 mm or less. In addition, a thickness dimension T3 of the lower base sheet 18 constituting the lower cover sheet 3 is preferably 0.15 mm or more and 0.26 mm or less, and a thickness dimension T4 of the lower seal sheet 19 is preferably 0.05 mm or more and 0.1 mm or less. Furthermore, a thickness dimension T5 of the upper base sheet 27 constituting the upper cover sheet is preferably 0.05 mm or more and 0.1 mm or less.

In the present embodiment, the thickness dimension T3 of the lower base sheet 18 is set to 0.2 mm, and the thickness dimension T4 of the lower seal sheet 19 is set to 0.085 mm. In addition, the thickness dimension T5 of the upper base sheet 27 is set to 0.085 mm. Therefore, the thickness dimension T1 of the lower cover sheet 3 is 0.285 mm, the thickness dimension T2 of the upper cover sheet 4 is 0.085 mm, and the total thickness dimension (T1 + T2) of the upper and lower cover sheets 4 and 3 is 0.37 mm.

Over sheets 28 are stacked on outer surfaces of the upper and lower cover sheets 3 and 4, respectively. Specifically, a lower over sheet 28A (28) is disposed on the lower side of the lower seal sheet 19, and an upper over sheet 28B (28) is disposed on the upper side of the upper base sheet 27. Each of the upper and lower over sheets 28B and 28A includes polycarbonate (PC) as material, and is formed in a flat plate shape having no hole or the like. Each of a thickness dimension T6 of the lower over sheet 28A and a thickness dimension T7 of the upper over sheet 28B is preferably set to 0.05 mm or more and 0.1 mm or less. In the present embodiment, the thickness dimension T6 of the lower over sheet 28A is set to 0.05 mm, and the thickness dimension T7 of the upper over sheet 28B is set to 0.05 mm.

Sheet bodies including polycarbonate and forming the upper and lower cover sheets 4 and 3 and the upper and lower over sheets 28B and 28A each include a uniaxially stretched sheet body. In the uniaxially stretched sheet body, the strength (resistance force) against deformation is slightly different between the stretching direction and the direction orthogonal to the stretching direction. Therefore, in a case where each of the sheets 3, 4, 28A, and 28B includes a uniaxially stretched sheet body, it is preferable to stack the sheets so that the stretching directions of adjacent sheet bodies are different from each other. In the present embodiment, the stretching direction of the sheet body is arranged in the left-right direction in the lower base sheet 18, arranged in the front-rear direction in the lower seal sheet 19, and arranged in the left-right direction in the lower over sheet 28A. In addition, in the upper base sheet 27, the stretching direction is arranged in the front-rear direction, and in the upper over sheet 28B, the stretching direction is arranged in the left-right direction. In this way, by stacking the sheets so that the stretching directions intersect (are orthogonal to) each other, strength and flexibility against bending can be substantially uniformly exerted against deformation in all directions.

The IC sheet 1 is formed by integrating the inlet 2, the upper and lower cover sheets 4 and 3, and the upper and lower over sheets 28B and 28A by hot pressing. Note that each of the support sheet 10 and the sheets 3, 4, 28A, and 28B at the time of manufacturing includes a sheet body one size or more larger than the planar size of the IC sheet 1. In the manufacture of the IC sheet 1, first, the lower base sheet 18, the lower seal sheet 19, and the lower over sheet 28A are stacked in the described order on the lower side of the inlet 2, and the upper base sheet 27 and the upper over sheet 28B are stacked in the described order on the upper side of the inlet 2.

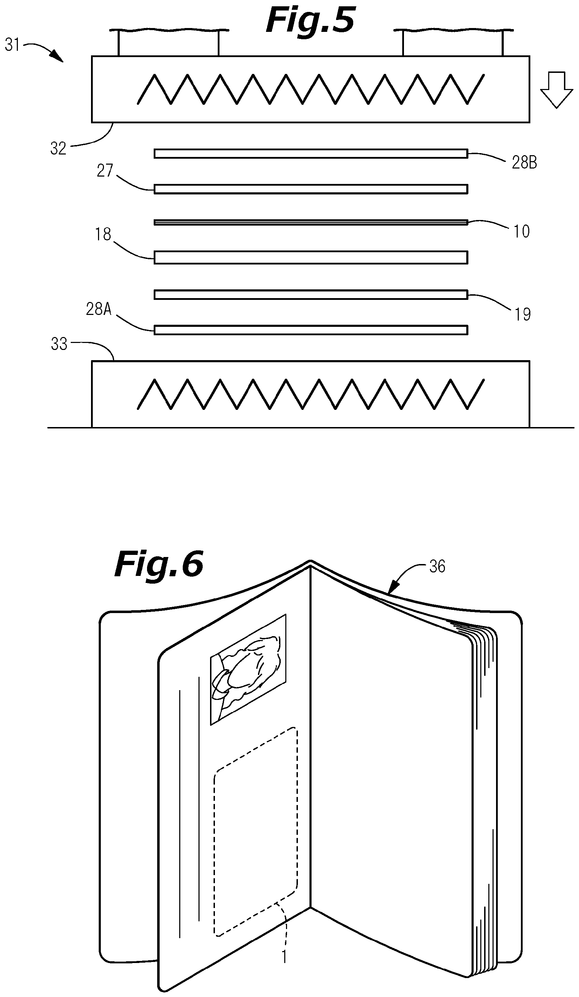

Next, the stacked sheet group is set between upper and lower heating molds 32 and 33 of a hot press apparatus 31 illustrated in FIG. 5. In this state, while heating the heating molds 32 and 33, the upper heating mold 32 is moved downward and pressed against the lower heating mold 33, and the upper and lower cover sheets 4 and 3 and the upper and lower over sheets 28B and 28A including the inlet 2 are held in a pressurized state for a predetermined time. The upper and lower cover sheets 4 and 3 and the upper and lower over sheets 28B and 28A are softened by being held while being heated and pressurized in this manner. At this time, at the portion where polycarbonate resin constituting the softened upper and lower base sheets 18 and 27 is in contact with the support sheet 10, the polycarbonate resin enters between the fibers of the upper and lower base fabrics 15 and 14 forming the support sheet 10, the upper and lower base fabrics 15 and 14 each including nonwoven fabric. Further, the facing surfaces of any two of the sheets 18, 19, 27, 28A, and 28B in contact with each other are in close contact with each other. At this time, since the upper and lower base fabrics 15 and 14 of the support sheet 10 are near the center of the sheet group, the sheets 18, 19, 27, 28A, and 28B are softened earlier than the upper and lower base fabrics 15 and 14, so that the polycarbonate resin constituting the base sheets 18 and 27 is pushed into between the fibers of the upper and lower base fabrics 15 and 14.

When heating by the hot press apparatus 31 is released after holding for a predetermined time, curing of each of the sheets 18, 19, 27, 28A, and 28B starts, and the polycarbonate resin constituting the upper and lower base sheets 27 and 18 (upper and lower cover sheets 4 and 3) solidifies in a state of entering between fibers of the nonwoven fabric of the support sheet 10, so that the inlet 2 and both the base sheets 18 and 27 are integrated. Further, the respective sheets 18, 19, 27, 28A, and 28B in contact with one another are integrated by solidifying the polycarbonate resin constituting the sheets in a mixed state. A blank body in which the solidification is completed and the inlet 2 and the sheets 3, 4, 28A, and 28B are integrated is taken out from the hot press apparatus 31 after the pressurization by the upper heating mold 32 is released. Finally, the IC sheet 1 is obtained by punching or cutting the taken-out blank body into a normal plane size using a punching apparatus or a cutting apparatus (not illustrated).

The upper and lower base fabrics 15 and 14 constituting the support sheet 10 are compressed in the thickness direction by heating and pressurization by the hot press apparatus 31 at the time of manufacturing, and the upper and lower base sheets 27 and 18 enter between fibers of the nonwoven fabric, so that the upper and lower base fabrics 15 and 14 are substantially taken into the upper and lower base sheets 27 and 18. Therefore, the thickness dimension of the support sheet 10 is absorbed by the thickness dimensions T3 and T5 of the upper and lower base sheets 27 and 18, and the thickness dimension of the manufactured IC sheet 1 is formed to be 0.47 mm, which is the same as the total thickness dimension of the upper and lower cover sheets 4 and 3 and the upper and lower over sheets 28B and 28A, or slightly larger than 0.47 mm. Note that in FIG. 1, the thickness is left in order to facilitate understanding of the stacked state.

In the manufacture of the IC sheet 1 by hot pressing, in order to strengthen the welding between the lower base sheet 18 and the lower seal sheet 19, between the lower seal sheet 19 and the lower over sheet 28A, and between the upper base sheet 27 and the upper over sheet 28B in contact with each other, it is preferable that the front and back surfaces of the sheet bodies forming the lower base sheet 18, the lower seal sheet 19, the upper base sheet 27, the lower over sheet 28A, and the upper over sheet 28B are not smooth but slightly roughened. As a result, it is possible to increase the area of close contact at the time of welding, and further, it is possible to prevent deterioration of work efficiency due to mutual attraction by static electricity when the sheet bodies are stacked as the group of sheets. Note that the lower surface of the lower over sheet 28A and the upper surface of the upper over sheet 28B are softened at the time of hot pressing, and the surface shapes of the upper and lower heating molds 32 and 33 are transferred. Therefore, in a case where the surfaces of the heating molds 32 and 33 are smooth, the front and back surfaces of the IC sheet 1 are smooth surfaces.

FIG. 6 illustrates an example in which the IC sheet 1 is mounted on a passport (booklet) 36. The IC sheet 1 is enclosed inside a predetermined page constituting the passport 36, specifically, a data page on which a face photograph and personal information are printed. In the IC chip 7, information on the possessor matching the content described in the data page at the time of creating the passport 36 is recorded. By accessing the IC chip 7 with a dedicated reader/writer, the information on the possessor described in the data page of the passport 36 can be compared with the information on the possessor recorded in the IC chip 7, and the authenticity of the passport 36 can be determined. In addition, since the IC sheet 1 is thinner than a non-contact IC card conforming to the standard, even in a case where the IC sheet 1 is mounted on the passport 36 (enclosed inside the data page), the passport 36 can be prevented from being bulky due to the IC sheet 1. Note that, although FIG. 6 illustrates an example in which the IC sheet 1 is enclosed in the data page, the IC sheet 1 may be enclosed in the front/back cover (cover page) or a page (center page) other than the data page.

As described above, in the IC sheet 1 of the present embodiment, since the polycarbonate resin constituting the upper and lower cover sheets 4 and 3 is solidified in a mixed state, the cover sheets 4 and 3 can be firmly integrated. In addition, when these cover sheets 4 and 3 are integrated, the polycarbonate resin is solidified in a state of entering between the fibers of the nonwoven fabric which is the support sheet 10, so that the fibers of the nonwoven fabric and the polycarbonate resin can be firmly joined to firmly integrate the three parts (the upper and lower cover sheets 4 and 3 and the inlet 2) in a state where the inlet 2 is sandwiched between the upper and lower cover sheets 4 and 3. Furthermore, if the fibers of the nonwoven fabric of the support sheet 10 and the polycarbonate resin are bonded, peeling between the inlet 2 and the cover sheets 4 and 3 hardly occurs. In the case of trying to forcibly peel the cover sheets 4 and 3 from the inlet 2, the support sheet 10 is torn and the inlet 2 is destroyed, so that it is impossible to take out the IC chip 7 including the antenna 8 in a sound state. Therefore, the IC sheet having excellent security can be obtained. As described above, in order to cause the cover sheets 3 and 4 to enter between the fibers of the nonwoven fabric forming the support sheet 10, the softened cover sheets 3 and 4 can be pressed between the fibers by heating the upper and lower cover sheets 4 and 3 including polycarbonate to a temperature at which the upper and lower cover sheets 4 and 3 can be softened and pressing the upper and lower cover sheets 4 and 3 in the thickness direction by hot pressing as in the conventional case. Therefore, it is not necessary to provide a special manufacturing process, and productivity is not lowered. As described above, according to the IC sheet 1 of the present embodiment, it is possible to reliably prevent the cover sheets 3 and 4 from being peeled off from the inlet 2 without lowering the productivity while using polycarbonate having better mechanical strength than conventional amorphous polyethylene terephthalate as the material of the upper and lower cover sheets 4 and 3.

If the total thickness dimension (T1 + T2) of the thickness dimensions T1 and T2 of the upper and lower cover sheets 3 and 4 is less than 0.35 mm, the strength required for the IC sheet cannot be secured even with polycarbonate having high mechanical strength, and the resistance to bending and the impact resistance are insufficient. In addition, if the total thickness dimension (T1 + T2) of the thickness dimensions T1 and T2 of the upper and lower cover sheets 3 and 4 exceeds 0.5 mm, required mechanical strength can be sufficiently satisfied, but flexibility is lost. From the above, in order to secure the strength and flexibility required for the IC sheet 1, the total thickness dimension (T1 + T2) of the thickness dimensions T1 and T2 of the upper and lower cover sheets 3 and 4 is preferably set to 0.35 mm or more and 0.5 mm or less. The total thickness dimension of the upper and lower cover sheets 3 and 4 is more preferably set to 0.35 mm or more and 0.45 mm or less.

If the minimum dimension of each of the thickness dimension T1 of the lower cover sheet 3 and the thickness dimension T2 of the upper cover sheet 4 is less than 0.05 mm, most of the lower cover sheet 3 or the upper cover sheet 4 enters between the fibers of the support sheet 10 at the time of hot pressing in manufacturing, so that even in a case where the upper and lower cover sheets 3 and 4 include colored polycarbonate, there is a possibility that the IC chip 7 and the antenna 8 may be seen through, and there is a concern of security that concealability is poor. In addition, the nonwoven fabric of the support sheet 10 may exposed on the surface of the IC sheet 1, so that the appearance may be deteriorated. Therefore, the minimum dimension of each of the thickness dimension T1 of the lower cover sheet 3 and the thickness dimension T2 of the upper cover sheet 4 is preferably set to 0.05 mm or more.

Since the IC chip 7 is accommodated in the relief portion 24 including the recess formed in the lower cover sheet 3, it is possible to effectively prevent damage of the IC chip 7 due to compression by the upper and lower cover sheets 3 and 4 at the time of hot pressing in the manufacture of the IC sheet 1. In addition, it is possible to prevent deterioration in appearance due to deterioration in smoothness of the surface of the IC sheet 1 caused by slight expansion of the portion where the IC chip 7 exists due to a difference in the amount of shrinkage due to the difference in thickness between the portion where the IC chip 7 exists and the other portion after hot pressing in a case where the relief portion 24 is not provided.

Since the relief portion 24 is formed by the lower through hole 20 formed in the lower base sheet 18 and the lower seal sheet 19 closing the lower through hole 20, the relief portion 24 having a recessed shape can be easily formed in the lower cover sheet 3 as compared with a case where a recess is formed in one sheet body to form the relief portion 24. This is because cutting or the like is required in the case of forming a recess in the sheet body, but a through-hole can be easily formed by punching out the sheet body, and the recess can be formed by closing one of the openings of the hole by hot pressing. In addition, if the lower seal sheet 19 is formed in a flat plate shape thinner than the lower base sheet 18, an increase in thickness due to the two-layer structure of the lower cover sheet 3 can be suppressed, which can contribute to thinning of the IC sheet 1. Furthermore, since the lower cover sheet 3 has a two-layer structure of the lower base sheet 18 and the lower seal sheet 19, and both the sheets 18 and 19 are stacked such that the stretching directions of both the sheets 18 and 19 intersect (are orthogonal to) each other, strength and flexibility against bending can be substantially uniformly exerted against deformation in all directions as compared with a case where the lower cover sheet 3 has a single-layer structure.

At the time of manufacturing the IC sheet 1, the lower seal sheet 19 may be stacked on the upper side of the lower base sheet 18 and temporarily fixed by welding, and both the temporarily fixed sheets 18 and 19 may be placed on the lower heating mold 33. In this case, by making the thickness dimension T3 of the lower base sheet 18 thicker than the thickness dimension T4 of the lower seal sheet 19, it is possible to perform temporary fixing by welding of both the sheets 18 and 19 with a small amount of heat, so that work efficiency of the temporary fixing work can be improved and productivity of the IC sheet 1 can be improved. In addition, if the thickness dimension T3 of the lower base sheet 18 is made larger than the thickness dimension T4 of the lower seal sheet 19, for example, handling becomes easy at the time of welding of both the sheets 18 and 19, temporary fixing work using an adhesive, punching work of both the temporarily fixed sheets 18 and 19, attaching work of the inlet 2, and the like, and work efficiency can be improved.

In the IC sheet 1 of the present embodiment, the inlet 2 is formed as one assembly by holding the IC chip 7, the chip base 9 supporting the IC chip 7, and the antenna 8 between both the base fabrics 14 and 15 constituting the support sheet 10. As described above, according to the inlet 2 in which the IC chip 7, the antenna 8, and the chip base 9 are held between the base fabrics 14 and 15, when the inlet 2 is handled at the time of manufacturing the IC sheet 1 or the like, the base fabrics 14 and 15 can protect the IC chip 7 and the antenna 8 from coming into contact with other objects. According to the base fabrics 14 and 15 each including nonwoven fabric, it is possible to effectively prevent damage of the IC chip 7 and the antenna 8 due to impact of contact or the like by cushioning properties derived from the nonwoven fabric. The inlet 2 configured as an assembly is also excellent in that handling at the time of manufacturing the IC sheet 1 is facilitated.

When the IC sheet 1 is formed including the inlet 2, the outer surfaces of the support sheet 10 (base fabrics 14 and 15) portion vertically sandwiching the IC chip 7, the chip base 9, and the antenna 8 accommodated in the relief portion 24 may be in either a state of being separated from or in contact with the upper base sheet 27 (upper cover sheet 4) and the lower seal sheet 19 defining the upper and lower surfaces of the relief portion 24. In a case where the outer surfaces of the support sheet 10 are separated from the upper base sheet 27 and the lower seal sheet 19 that define the upper and lower surfaces of the relief portion 24, the IC chip 7, the chip base 9, and the antenna 8 can be held in a dangling manner in the relief portion 24. Therefore, when the IC sheet 1 is deformed in a case where the IC sheet 1 is bent, or an impact is applied to the IC sheet 1, the stress does not directly act on the IC chip 7 and the antenna 8, and damage of the IC chip 7 and the antenna 8 can be prevented. In addition, in a case where the outer surfaces of the support sheet 10 are in contact with the upper base sheet 27 and the lower seal sheet 19 that define the upper and lower surfaces of the relief portion 24, it is possible to prevent the outer surfaces of the IC sheet 1 facing the relief portion 24 from being recessed or inflated. In addition, when the IC sheet 1 is deformed in a case where the IC sheet 1 is bent, or an impact is applied to the IC sheet 1, the stress can be released by the entire IC sheet 1, and further, the stress can be absorbed by the cushioning property derived from the support sheet 10 including nonwoven fabric, so that the IC chip 7 can be prevented from being damaged.

In the IC sheet 1 of the present embodiment, the lower base fabric 14 is separated from the lower seal sheet 19, and the upper base fabric 15 is in contact with the upper base sheet 27. Note that in the present embodiment, by adjusting the thickness dimension T3 of the lower base sheet 18, it is also possible to adopt a configuration in which the outer surfaces of the support sheet 10 (base fabrics 14 and 15) located in the relief portion 24 are in contact with the upper base sheet 27 and the lower seal sheet 19.

In the above embodiment, each of the upper and lower over sheets 28B and 28A includes polycarbonate, but may include a sheet body including another resin material. For example, by forming the over sheets 28 (28A and 28B) including a resin material having a tensile strength higher than that of polycarbonate and stacking the over sheets 28, the characteristics of the materials such as securing the flexural strength by the upper and lower cover sheets 4 and 3 and securing the tensile strength by the over sheets 28 are exhibited in a composite manner, and the IC sheet 1 having the mechanical strength suitable for the use mode can be relatively easily obtained by selecting the resin material.

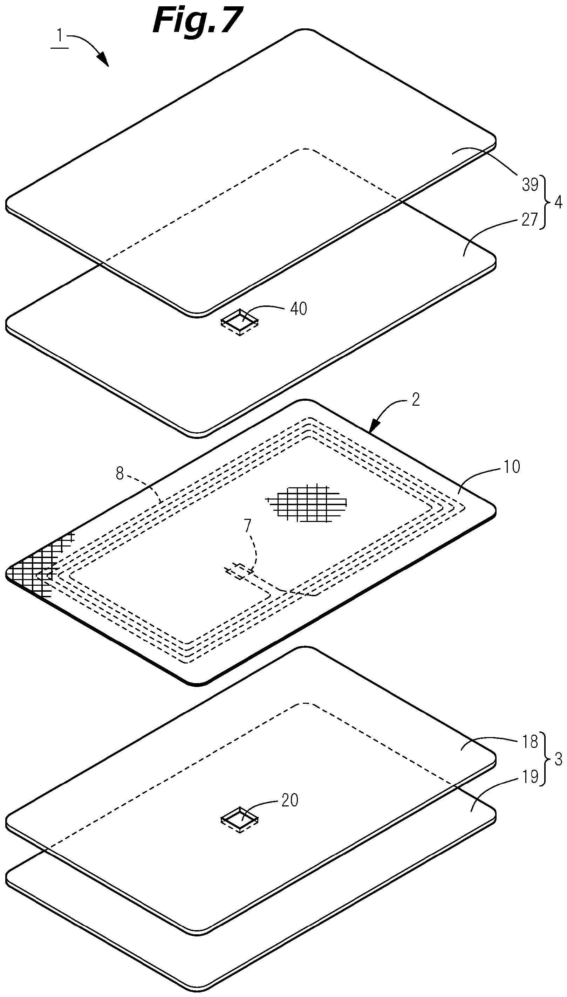

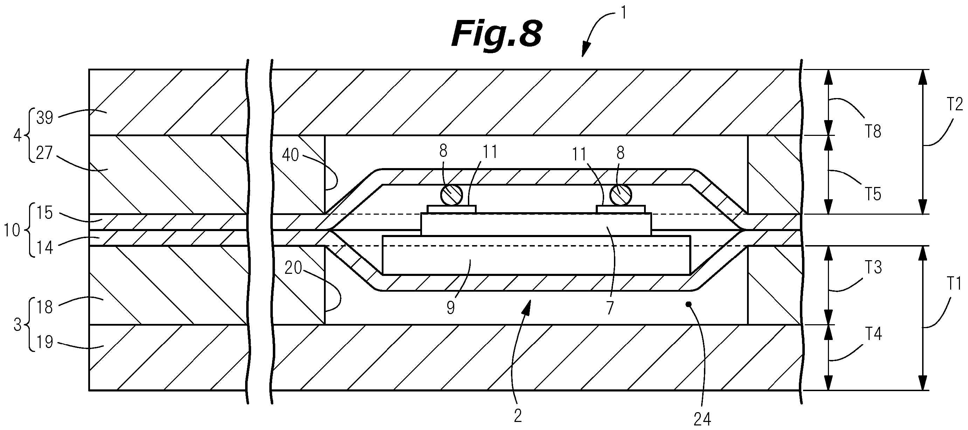

(Second embodiment) FIGS. 7 and 8 illustrate a second embodiment of the IC sheet according to the present invention. The present embodiment is different from the first embodiment in that over sheets 28A and 28B (28) stacked on the outer surface sides of upper and lower cover sheets 4 and 3 are omitted, and the configuration of an upper cover sheet 4 is different. Specifically, similarly to the lower cover sheet 3, the upper cover sheet 4 includes an upper base sheet 27 and an upper seal sheet 39. Each of the sheets 27 and 39 is formed using polycarbonate (PC) as material, the upper base sheet 27 is formed in a flat plate shape in which an upper through hole 40 vertically penetrating is opened, and the upper seal sheet 39 is formed in a flat plate shape without a hole or the like. The upper through hole 40 is provided at a position corresponding to an IC chip 7 of an inlet 2. In a state where the upper base sheet 27 and the upper seal sheet 39 are stacked, an upper opening portion of the upper through hole 40 is closed by the upper seal sheet 39, and the upper through hole 40 is configured as a recess opened downward. Opposite recesses including the upper through hole 40 and a lower through hole 20 and formed in the upper and lower cover sheets 3 and 4 function as a relief portion 24 in which the IC chip 7 supported by a chip base 9 is accommodated.

In the present embodiment, a thickness dimension T3 of a lower base sheet 18 is set to 0.1 mm, and a thickness dimension T4 of a lower seal sheet 19 is set to 0.085 mm. In addition, a thickness dimension T5 of the upper base sheet 27 is set to 0.1 mm, and a thickness dimension T8 of the upper seal sheet 39 is set to 0.085 mm. Therefore, a thickness dimension T1 of the lower cover sheet 3 is 0.185 mm, a thickness dimension T2 of the upper cover sheet 4 is 0.185 mm, and the total thickness dimension (T1 + T2) of the upper and lower cover sheets 3 and 4 is 0.37 mm. Also in the present embodiment, sheet bodies including polycarbonate and form the lower base sheet 18, the lower seal sheet 19, the upper base sheet 27, and the upper seal sheet 39 each include a uniaxially stretched sheet body, and the sheet bodies adjacent to each other are stacked so as to have different stretching directions. Since the others are similar to those of the first embodiment, the same members are denoted by the same reference numerals, and the description thereof will be omitted. The same applies to the following third and subsequent embodiment.

In the IC sheet 1 of the present embodiment, since the relief portion 24 is formed by the upper and lower through holes 40 and 20 formed in the base sheets 18 and 27 and the upper and lower seal sheets 19 and 39 that close the through holes 20 and 40, the recessed relief portion 24 can be more easily formed in the upper and lower cover sheets 3 and 4 as compared with a case where recesses are formed in the upper and lower cover sheets 3 and 4 to form the relief portion 24. In addition, since the lower seal sheet 19 is formed in a flat plate shape thinner than the lower base sheet 18 and the upper seal sheet 39 is formed in a flat plate shape thinner than the upper base sheet 27, it is possible to suppress an increase in thickness due to the two-layer structure of each of the upper and lower cover sheets 3 and 4, which can contribute to thinning of the IC sheet 1. Furthermore, since the lower base sheet 18 and the lower seal sheet 19, and the upper base sheet 27 and the upper seal sheet 39 are arranged such that the stretching directions of the lower base sheet 18 and the lower seal sheet 19 intersect (are orthogonal to) each other and the stretching directions of the upper base sheet 27 and the upper seal sheet 39 intersect (are orthogonal to) each other, strength and flexibility against bending can be substantially uniformly exerted against deformation in all directions as compared with a case where each of the upper and lower cover sheets 3 and 4 has a single-layer structure.

In the IC sheet 1 of the present embodiment, the IC chip 7, an antenna 8, and a chip base 9 are accommodated in the relief portion 24 in a state where a lower base fabric 14 and the lower seal sheet 19 are separated from each other, and an upper base fabric 15 and the upper seal sheet 39 are separated from each other. Note that in the present embodiment, by adjusting the thickness dimension T3 of the lower base sheet 18 and the thickness dimension T5 of the upper base sheet 27, it is possible to adopt a configuration in which the lower base fabric 14 is in contact with the lower seal sheet 19 and the upper base fabric 15 is in contact with the upper seal sheet 39.

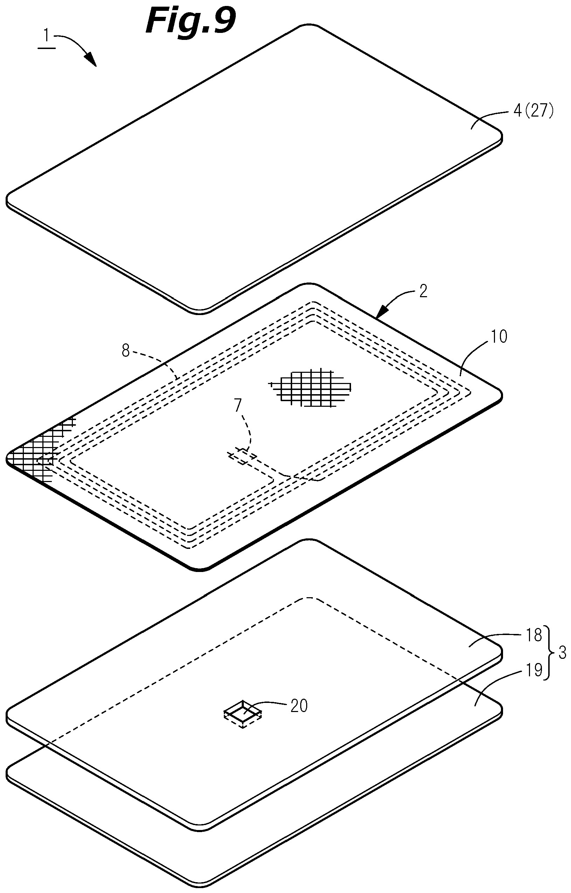

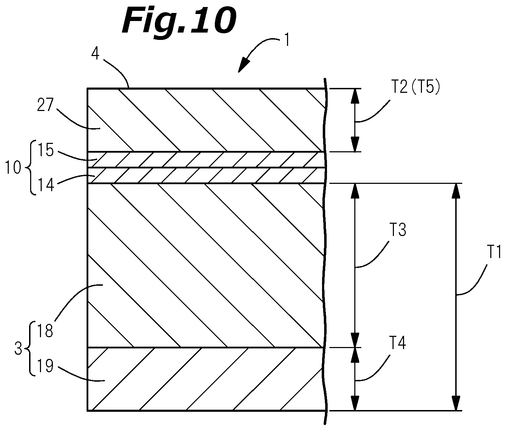

(Third embodiment) FIGS. 9 and 10 illustrate a third embodiment of an IC sheet according to the present invention. The present embodiment is different from the first embodiment in that the upper and lower over sheets 28A and 28B (28) stacked on the outer surface sides of upper and lower cover sheets 4 and 3 are omitted. In the present embodiment, the thickness dimension T3 of the lower base sheet 18 is set to 0.2 mm, and the thickness dimension T4 of the lower seal sheet 19 is set to 0.085 mm. In addition, the thickness dimension T5 of the upper base sheet 27 is set to 0.085 mm. Therefore, a thickness dimension T1 of the lower cover sheet 3 is 0.285 mm, a thickness dimension T2 of the upper cover sheet 4 is 0.085 mm, and the total thickness dimension T3 of the thickness dimension T1 and the thickness dimension T2 is 0.37 mm.

In the present embodiment, since the total number of sheet bodies constituting an IC sheet 1 is small, it is easy to reduce the thickness of the IC sheet 1. In addition, in hot pressing in manufacturing, since the volume of the sheet bodies to be softened is relatively small, the amount of heat required is small, and the heating time is short, so that productivity can be improved. Further, as in the present embodiment and the second embodiment described above, the over sheets 28 (28A, 28B) stacked on the outermost surfaces are not essential, and the upper and lower seal sheets 19 and 39 and the upper base sheet 27 may be exposed on the outer surfaces of the IC sheet 1.

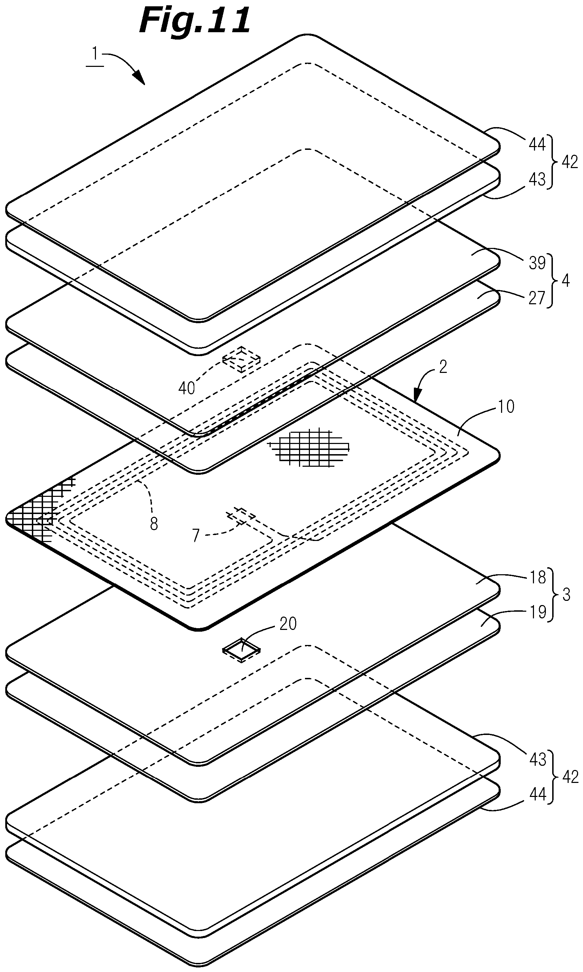

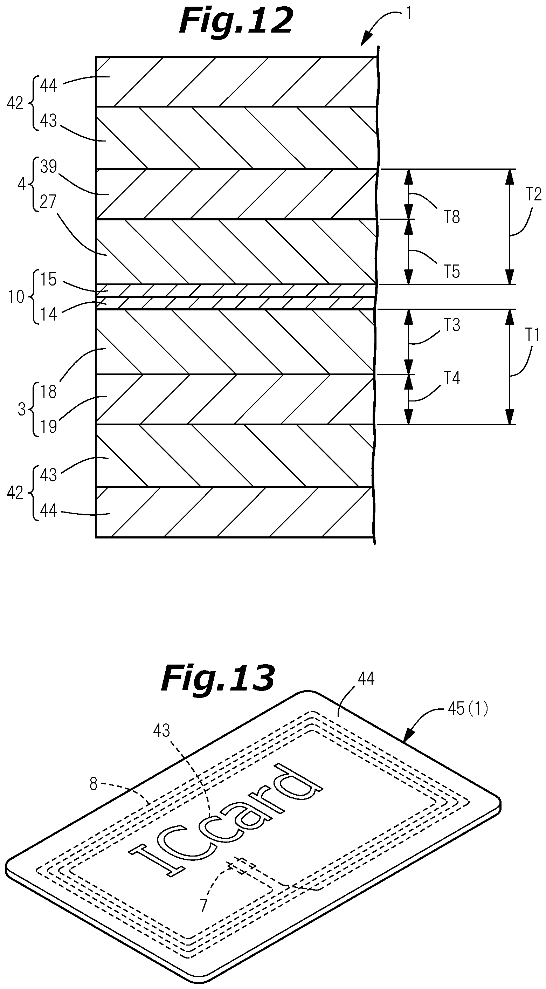

(Fourth embodiment) FIGS. 11 to 13 illustrate a fourth embodiment of the IC sheet according to the present invention, and in the present embodiment, an exterior sheet 42 is stacked on each of the outer surfaces of the upper and lower cover sheets 4 and 3 of the IC sheet 1 of the second embodiment. Each exterior sheet 42 includes a printing sheet 43 which is disposed on the side of the cover sheet 3 or 4 and on which a pattern or the like is printed and a protective sheet 44 which protects an outer surface (printing surface) of the printing sheet 43. The protective sheet 44 includes a transparent sheet body, and a pattern or the like of the printing sheet 43 can be visually recognized through the protective sheet 44. The thickness dimension of each printing sheet 43 is preferably 0.1 to 0.2 mm, and the thickness dimension of each protective sheet 44 is preferably 0.05 to 0.1 mm. In the present embodiment, the thickness dimension of the printing sheet 43 is set to 0.15 mm, and the thickness dimension of the protective sheet 44 is set to 0.05 mm. Therefore, the thickness dimension of the entire IC sheet 1 is formed to be about 0.77 mm.

As described above, the IC sheet 1 of the present embodiment is configured as a non-contact IC card 45 conforming to the JIS standard by stacking the exterior sheets 42 on the upper and lower surfaces of the IC sheet 1. As described above, according to the non-contact IC card 45 including the IC sheet 1 of the present embodiment, the non-contact IC card 45 having excellent security can be obtained. In addition, since the exterior sheets 42 are stacked on the upper and lower surfaces of the IC sheet 1, the strength as the non-contact IC card 45 is secured by the IC sheet 1. Therefore, the degree of freedom of the sheet material that can be used for the printing sheet 43 and the protective sheet 44, which are the exterior sheet 42, increases, and accordingly, the selection range of the form of printing that can be performed increases, so that the decorativeness and design of the non-contact IC card 45 can be improved.

As described above, by providing the printing sheet 43 and the like and adjusting the thickness dimension of the IC sheet 1, the IC sheet 1 can also be applied to other uses having different thickness standards. The IC sheet 1 of each of the first embodiment and the third embodiment can also be configured as the non-contact IC card 45 by disposing the printing sheets 43 and the protective sheets 44.

In each of the above embodiments, the polycarbonate forming both the cover sheets 3 and 4 may be, for example, environmentally friendly polycarbonate called bio-polycarbonate using plant-derived raw material or the like. In addition, polycarbonate having biodegradability such as soil degradability, water degradability, or marine degradability may be used. In this case, for example, copolymerized polycarbonate produced by reacting an isosorbide skeleton (cyclic diol), a diol mixture, and diphenyl carbonate (DPC) can be mentioned. Note that the polycarbonate may be any biodegradable polycarbonate, and is not limited to the copolymerized polycarbonate. In addition, as the polycarbonate, polycarbonate having no biodegradability can also be used.

In each of the above embodiments, the support sheet 10 includes the two base fabrics 14 and 15, but may include one nonwoven fabric. In this case, fibers are entangled in a state of including the IC chip 7 and the antenna 8 to form the support sheet 10 including a nonwoven fabric, or an easily softenable layer softened at a temperature lower than that of the support sheet 10 is formed on the upper surface or the lower surface of the support sheet 10, and the IC chip 7 and the antenna 8 are fixed to the easily softenable layer. The support sheet 10 (base fabrics 14 and 15) may include polycarbonate. Moreover, the support sheet 10 can include a nonwoven fabric in which a large number of independent holes are opened, and as material of the support sheet 10 in this case, polycarbonate or the materials described in the above embodiments can be used. As a reference example of the material forming the support sheet 10, a film body or a sheet body provided with a large number of independent holes can be mentioned. The film body or the sheet body can include polyvinyl chloride (PVC), polyethylene terephthalate (PET, PET-G), polyethylene naphthalate (PEN), or the like.

The antenna 8 may be formed by screen printing, etching, or the like on the surface of a film or sheet including polyvinyl chloride (PVC), polyethylene terephthalate (PET, PET-G), polyethylene naphthalate (PEN), or the like. In this case, it is preferable to provide a large number of holes in the film or the sheet except the portion where the antenna 8 is formed. The configuration such as the number and thickness dimensions of the sheets forming the upper and lower cover sheets 4 and 3 is not limited to the configurations of the above embodiments. In addition, in the first embodiment and the third embodiment, the upper and lower cover sheets 4 and 3 may be disposed upside down. The planar size of the support sheet 10 (inlet 2) can be formed smaller than the planar size of the IC sheet 1 to be manufactured. In this case, by arranging the center of the inlet 2 in the plane so as to coincide with the center of the IC sheet 1, the support sheet 10 (inlet 2) can be well prevented from being exposed on the outer surface of the IC sheet 1. Note that in the region on the peripheral edge side of the IC sheet 1 where the support sheet 10 does not exist, the upper cover sheet 4 and the lower cover sheet 3 are directly welded. The IC sheet according to the present invention can contribute to Goal 9 (Industry, Innovation, and Infrastructure) and Goal 12 (Responsible Consumption and Production) of Sustainable Development Goals (SDGs) proposed by the United Nations.

According to the IC sheet of the present invention, since the polycarbonate resin constituting the upper and lower cover sheets 4 and 3 is solidified in a mixed state, both the cover sheets 4 and 3 can be firmly integrated. In addition, when these cover sheets 4 and 3 are integrated, the polycarbonate resin is solidified in a state of entering between the fibers of the nonwoven fabric which is the support sheet 10, so that the fibers of the nonwoven fabric and the polycarbonate resin can be firmly joined to firmly integrate the three parts (the upper and lower cover sheets 4 and 3 and the inlet 2) in a state where the inlet 2 is sandwiched between the upper and lower cover sheets 4 and 3. As described above, according to the present invention, since the three parts, that is, the inlet 2 and the cover sheets 4 and 3 can be firmly integrated, the cover sheets 4 and 3 can be reliably prevented from peeling off from the inlet 2. In addition, the IC sheet of the present invention can be manufactured by disposing the upper and lower cover sheets 3 and 4 so as to sandwich the inlet 2 therebetween and then softening the upper and lower cover sheets 4 and 3 by hot pressing. Therefore, as in a form in which the inlet and the cover sheet are joined with an adhesive, an adhesive application process is unnecessary, and it is possible to prevent productivity of the IC sheet from being lowered. As described above, according to the IC sheet of the present invention, it is possible to reliably prevent the cover sheets 3 and 4 from peeling off from the inlet 2 without lowering productivity. In addition, by using polycarbonate having mechanical strength superior to that of conventional amorphous polyethylene terephthalate as material of the upper and lower cover sheets 4 and 3, the IC sheet having more excellent mechanical strength (flexural strength and impact resistance) can be obtained. It is also possible to reduce the thickness dimension. Furthermore, in the IC sheet of the present invention, in the case of trying to forcibly peel the cover sheets 4 and 3 from the inlet 2, the support sheet 10 is torn and the inlet 2 is destroyed, so that it is impossible to take out the IC chip 7 including the antenna 8 in a sound state, and the IC sheet having excellent security can be obtained.

When the thickness dimension of the lower cover sheet 3 is denoted by T1 and the thickness dimension of the upper cover sheet 4 is denoted by T2, the total thickness dimension (T1 + T2) of both the thickness dimensions T1 and T2 is preferably set to 0.35 mm or more and 0.5 mm or less. This is because if the total thickness dimension of the upper and lower cover sheets 3 and 4 is less than 0.35 mm, the strength required for the IC sheet cannot be secured even with polycarbonate having high mechanical strength, and the resistance to bending and the impact resistance are insufficient. In addition, when the total thickness dimension of the upper and lower cover sheets 3 and 4 exceeds 0.5 mm, required mechanical strength can be sufficiently satisfied, but flexibility is lost.

The minimum dimension of each of the thickness dimension T1 of the lower cover sheet 3 and the thickness dimension T2 of the upper cover sheet 4 is preferably set to 0.05 mm or more. This is because if each of the thickness dimension T1 and the thickness dimension T2 is less than 0.05 mm, most of the lower cover sheet 3 or the upper cover sheet 4 enters between the fibers of the support sheet 10 at the time of hot pressing in manufacturing, so that even in a case where the upper and lower cover sheets 3 and 4 include colored polycarbonate, the IC chip 7 and the antenna 8 are seen through, concealability is poor, and there is a concern of security. In addition, the nonwoven fabric of the support sheet 10 may be exposed on the surface of the IC sheet 1, so that the appearance may be deteriorated.

When the over sheet 28 including a sheet body including resin as material is disposed on the outer surface of the lower cover sheet 3 and/or the outer surface of the upper cover sheet 4, for example, the over sheet 28 is disposed such that the stretching direction of the over sheet 28 intersects (is orthogonal to) the stretching direction of the upper and lower cover sheets 4 and 3, whereby strength and flexibility against bending can be substantially uniformly exerted against deformation in all directions. For example, by forming the over sheet 28 including resin material having a tensile strength higher than that of polycarbonate, the characteristics of the materials such as securing the flexural strength by the upper and lower cover sheets 4, 3 and securing the tensile strength by the over sheet 28 can be exhibited in a composite manner. As described above, it is possible to impart appropriate mechanical strength to the IC sheet according to the use mode by selecting the stretching direction of the over sheet 28 or the resin material of the over sheet 28.

If the relief portion 24 including a recess is formed in the lower cover sheet 3, and the IC chip 7 is accommodated in the relief portion 24 in a state where the support sheet 10 and the cover sheets 4 and 3 are stacked, it is possible to effectively prevent the IC chip 7 from being damaged by being compressed by the upper and lower cover sheets 4 and 3 at the time of hot pressing in the manufacture of the IC sheet 1. In addition, it is also possible to prevent deterioration in appearance due to deterioration in smoothness of the surface of the IC sheet 1 caused by slight expansion of the portion where the IC chip 7 exists due to a difference in the amount of shrinkage due to the difference in thickness between the portion where the IC chip 7 exists and the other portion after hot pressing in a case where the relief portion 24 is not provided.

If the lower cover sheet 3 includes the lower base sheet 18 and the lower seal sheet 19 and the relief portion 24 is formed by the lower through hole 20 formed in the lower base sheet 18 and the lower seal sheet 19 closing the lower through hole 20, the relief portion 24 can be more easily formed in the lower cover sheet 3 as compared with a case where a recess is formed in one sheet body to form the relief portion 24. This is because cutting or the like is required in the case of forming a recess in the sheet body, but a through-hole can be easily formed by punching out the sheet body, and the recess can be formed by closing one of the openings of the hole by hot pressing. In addition, if the lower seal sheet 19 is formed in a flat plate shape thinner than the lower base sheet 18, an increase in thickness due to the two-layer structure of the lower cover sheet 3 can be suppressed, which can contribute to thinning of the IC sheet 1. Furthermore, if the lower cover sheet 3 has a two-layer structure, for example, by stacking uniaxially stretched sheet bodies such that the stretching directions of the lower base sheet 18 and the lower seal sheet 19 intersect (are orthogonal to) each other, strength and flexibility against bending can be substantially uniformly exerted against deformation in all directions as compared with a case where the lower cover sheet 3 has a single-layer structure.

If the lower cover sheet 3 includes the lower base sheet 18 and the lower seal sheet 19, the upper cover sheet 4 includes the upper base sheet 27 and the upper seal sheet 39, and the relief portion 24 is formed by both the through holes 20 and 40 formed in the upper and lower base sheets 18 and 27 and the seal sheets 19 and 39 closing the through holes 20 and 40, similarly to the above, the relief portion 24 having a recessed shape can be more easily formed in the upper and lower cover sheets 4 and 3 as compared with a case where recesses are formed in the upper and lower sheet bodies to form the relief portion 24. In addition, if the lower seal sheet 19 is formed in a flat plate shape thinner than the lower base sheet 18 and the upper seal sheet 39 is formed in a flat plate shape thinner than the upper base sheet 27, it is possible to suppress an increase in thickness due to the two-layer structure of each of the upper and lower cover sheets 3 and 4, which can contribute to thinning of the IC sheet 1. Furthermore, when each of the upper and lower cover sheets 4 and 3 has a two-layer structure, for example, if the lower base sheet 18, the lower seal sheet 19, the upper base sheet 27, and the upper seal sheet 39 each include a uniaxially stretched sheet body and are arranged such that the stretching directions of the two (the lower base sheet 18 and the lower seal sheet 19 intersect (are orthogonal to) each other and the stretching directions of the two (the upper base sheet 27 and the upper seal sheet 39) intersect (are orthogonal to) each other, strength and flexibility against bending can be substantially uniformly exhibited against deformation in all directions as compared with a case where the upper and lower cover sheets 4 and 3 have a single-layer structure.

According to the passport 36 including the IC sheet 1 as described above, since the IC sheet 1 is thinner than a non-contact IC card conforming to the standard, even in a case where the IC sheet 1 is enclosed in the passport 36, the passport 36 can be prevented from being bulky due to the IC sheet 1.

According to the non-contact IC card 45 including the IC sheet 1 as described above, the non-contact IC card 45 having excellent security can be obtained. In addition, if the exterior sheet 42 is stacked on at least one of the upper and lower surfaces of the IC sheet 1, since the strength as the non-contact IC card 45 is secured by the IC sheet 1, the degree of freedom of the sheet material that can be used for the exterior sheet 42 increases, and the selection range of the form of printing that can be performed is widened accordingly, so that decorativeness and designability of the non-contact IC card 45 can be enhanced.

### REFERENCE SIGNS LIST

- 1: IC sheet
- 2: Inlet
- 3: Lower cover sheet
- 4: Upper cover sheet
- 7: IC chip
- 8: Antenna
- 10: Support sheet
- 18: Lower base sheet
- 19: Lower seal sheet
- 20: Lower through hole
- 24: Relief portion
- 27: Upper base sheet
- 28: Over sheet
- 39: Upper seal sheet
- 40: Upper through hole
- 42: Exterior sheet
- T1: Thickness dimension of lower cover sheet
- T2: Thickness dimension of upper cover sheet

## Claims

1. An IC sheet comprising:
an inlet (2) including an IC chip (7), an antenna (8) that is connected to the IC chip (7), and a support sheet (10) that includes a nonwoven fabric and holds the IC chip (7) and the antenna (8); and
cover sheets (3 and 4) that include polycarbonate and are disposed under and on the inlet (2), respectively,
wherein polycarbonate resin constituting the cover sheets (3 and 4) is solidified in a state of entering between fibers of the nonwoven fabric of the support sheet (10), so that the cover sheets (3 and 4) and the support sheet (10) are integrated.

2. The IC sheet according to claim 1, wherein when a thickness dimension of the lower cover sheet (3) is denoted by (T1) and a thickness dimension of the upper cover sheet (4) is denoted by (T2), a total thickness dimension of the thickness dimension (T1) and the thickness dimension (T2) is set to 0.35 mm or more and 0.5 mm or less.

3. The IC sheet according to claim 2, wherein a minimum dimension of each of the thickness dimension (T1) of the lower cover sheet (3) and the thickness dimension (T2) of the upper cover sheet (4) is set to 0.05 mm or more.

4. The IC sheet according to claim 1, wherein an over sheet (28) including a sheet body including resin as material is disposed on an outer surface of the lower cover sheet (3) and/or an outer surface of the upper cover sheet (4).

5. The IC sheet according to any one of claims 1 to 4, wherein
a relief portion (24) including a recess is formed in the lower cover sheet (3), and
the IC chip (7) is accommodated in the relief portion (24) in a state where the support sheet (10) and both the cover sheets (3 and 4) are stacked.

6. The IC sheet according to claim 5, wherein
the lower cover sheet (3) includes a lower base sheet (18) that has a flat plate shape and in which a lower through hole (20) is formed, and a lower seal sheet (19) that has a flat plate shape and has a thickness smaller than a thickness of the lower base sheet (18), the lower base sheet (18) is disposed under the support sheet (10), the lower seal sheet (19) is disposed under the lower base sheet (18), and
the lower through hole (20) and the lower seal sheet (19) that closes the lower through hole (20) form the relief portion (24).

7. The IC sheet according to claim 5, wherein
the lower cover sheet (3) includes a lower base sheet (18) that has a flat plate shape and in which a lower through hole (20) is formed, and a lower seal sheet (19) that has a flat plate shape and has a thickness smaller than a thickness of the lower base sheet (18), the lower base sheet (18) is disposed under the support sheet (10), the lower seal sheet (19) is disposed under the lower base sheet (18),
the upper cover sheet (4) includes an upper base sheet (27) that has a flat plate shape and in which an upper through hole (40) is formed and an upper seal sheet (39) that has a flat plate shape and has a thickness smaller than a thickness of the upper base sheet (27), the upper base sheet (27) is disposed on the support sheet (10), the upper seal sheet (39) is disposed on the upper base sheet (27), and
the relief portion (24) is formed by both the through holes (20 and 40) and the seal sheets (19 and 39) that close the through holes (20 and 40).

8. A passport comprising the IC sheet (1) according to claim 1.

9. A non-contact IC card comprising the IC sheet (1) according to claim 1.

10. The non-contact IC card according to claim 9, wherein an exterior sheet (42) is stacked on at least one of an upper surface or a lower surface of the IC sheet (1).
